Europäisches Patentamt

European Patent Office

Office européen des brevets

(19)

(11) Veröffentlichungsnummer : **0 105 836**
**B1**

(12)                    EUROPÄISCHE PATENTSCHRIFT

(45) Veröffentlichungstag der Patentschrift :
**11.01.89**

(51) Int. Cl.⁴ : **F 16 F   1/02, H 01 H 13/36**

(21) Anmeldenummer : **83810404.0**

(22) Anmeldetag : **06.09.83**

(54) **Feder für eine Taste.**

(30) Priorität : **09.09.82 CH 5361/82**

(43) Veröffentlichungstag der Anmeldung :
**18.04.84 Patentblatt 84/16**

(45) Bekanntmachung des ·Hinweises auf die Patenterteilung : **11.01.89 Patentblatt 89/02**

(84) Benannte Vertragsstaaten :
**AT CH DE FR GB IT LI NL**

(56) Entgegenhaltungen :
**DE–A– 2 359 971**
**US–A– 4 112 284**
**US–A– 4 301 345**

(73) Patentinhaber : **STANDARD TELEPHON UND RADIO AG**
**Friesenbergstrasse 75**
**CH-8055 Zürich (CH)**
**CH LI**
**ALCATEL N.V.**
**Strawinskylaan 537 (World Trade Center)**
**NL-1077 XX Amsterdam (NL)**
**DE FR GB IT NL AT**

(72) Erfinder : **Wild, Peter**
**Bolletstrasse 12**
**CH-8932 Mettmenstetten (CH)**
Erfinder : **Rometsch, Johannes**
**Sanweidstrasse**
**CH-5635 Rickenbach (CH)**
Erfinder : **Frey, Werner Urs**
**Dorfstrasse 96**
**CH-8800 Thalwil (CH)**
Erfinder : **Iseli, Karl**
**Neuheimstrasse 9**
**CH-8853 Lachen (CH)**

(74) Vertreter : **Bucher, Hans F.**
**Laupenstrasse 15**
**CH-3008 Bern (CH)**

**EP 0 105 836 B1**

Jouve, 18, rue St-Denis, 75001 Paris, France

**Beschreibung**

Die vorliegende Erfindung betrifft eine Feder für die Rückstellung des Stössels einer Taste gemäss dem Oberbegriff des 1. Anspruchs.

Tasten mit einer nichtlinearen Kraft/Weg-Kennlinie der Stösselfeder, d. h. mit einem mehr oder weniger ausgeprägten Druckpunkt, werden häufig für Sondertastaturen, seltener jedoch für normale alpha-numerische Tastaturen gefordert.

Aus dem Stand der Technik ist allgemein bekannt, dass eine über einen gegebenen Betätigungsweg bogenförmige Kraft/Weg-Kennlinie durch eine Kombination von drei Druckfedern mit je einer linearen Kennlinie erreicht werden kann, deren eine Enden in einem Punkt gelenkig miteinander verbunden sind, während sich die andern Enden von zwei der Federn symmetrisch an zwei unterhalb des Verbindungspunktes angeordneten Widerlagern drehbar abstützen und das Ende der dritten Feder eine feste Auflage in der Mitte zwischen diesen beiden Widerlagern und unterhalb denselben besitzt.

Bei einem Druck auf den Verbindungspunkt in Achsenrichtung der dritten Feder werden alle drei Federn zusammengedrückt. Der auf den Verbindungspunkt auszuübende Druck nimmt dabei längs des Betätigungsweges unterproportional zu, um ein Maximum zu erreichen, wenn der Verbindungspunkt auf einer Linie mit den Widerlagern der beiden erstgenannten Federn liegt. Anschliessend nimmt die Betätigungskraft wieder ab, da die beiden erstgenannten Federn sich wieder dehnen können und in der gleichen Richtung wie die Betätigungskraft auf die dritte Feder einwirken. Solange die kombinierte Federkraft der beiden erstgenannten Federn kleiner ist als die Rückstellkraft der dritten Feder, kehrt der Verbindungspunkt der drei Federn nach Wegnahme der Betätigungskraft wieder in die Ausgangslage zurück.

Es ist leicht einzusehen, dass eine solche Lösung relativ teuer ist und einen grossen Platzbedarf aufweist. Es verwundert daher nicht, dass allgemein nach einfacheren Lösungen Ausschau gehalten wurde. Eine dieser Lösungen besteht in der Verwendung eines Gummidoms als Stösselfeder, wobei die Gummidome einer Tastatur in einer einzigen Gummimatte zusammengefasst sein können. Eine andere Lösung zur Erreichung eines Druckpunktes besteht darin, im Tastenweg einen gefederten Nocken vorzusehen, wie dies z. B. in der DE-A-29 52 107 beschrieben ist. Es wurden aber auch Kombinationen von zwei und mehr Blattfedern zur Erreichung eines Druckpunktes vorgeschlagen. Eine solche Lösung ist im CH-A-591 154 beschrieben. Die beiden letztgenannten Lösungen ergeben sehr ausgeprägte Druckpunkte.

Alle diese Lösungen, mit Ausnahme jener mit Gummidomen, weisen den gemeinsamen Nachteil auf, dass sie zu gross sind. Insbesondere steht bei ergonomisch richtig gebauten Tastaturen, deren Tasten eine geringe Bauhöhe haben müssen, wenig Platz zur Verfügung, so dass für die Erreichung eines Druckpunktes und für die Stösselrückstellung unbedingt das gleiche Element verwendet werden muss. Im Interesse einer rationellen Fertigung und Lagerhaltung sollte in ein Tastenelement zudem wahlweise entweder eine Feder mit linearer oder eine mit bogenförmiger Kennlinie einbaubar sein, wie dies z. B. für das im EP-A-092 518 beschriebenen Tastenelement vorgesehen ist. Eine Lösung mit Gummidomen würde die obigen Forderungen erfüllen, ist jedoch recht teuer, da für die verlangte hohe Anzahl von Betätigungen besondere Gummimischungen notwendig sind.

Aus DE-A-2 359 971, Fig. 3 ist eine mäanderartige Feder für einen elektrischen Tastenschalter bekannt, die zwei Schlaufen aufweist. Die beiden Enden dieser Feder sind drehbar eingespannt und ihre zwei Fussbogen liegen auf einer Gegenfläche auf und bewirken eine Kontaktgabe, indem sie sich bei Einwirken einer Betätigungskraft auf die Spitze des die Fussbogen verbindenden Bogens auf der Gegenfläche gleitend auseinander bewegen und damit auf dieser Fläche angebrachte Kontakte miteinander verbinden.

Durch die besondere Form des Verbindungsbogens (Auswölbungen an dessen Schenkeln) und durch die nur wenig von der Wirkrichtung der Betätigungskraft abweichenden Lage der Schenkel in unbetätigtem Zustand des Schalters wird bei Einwirkung der Betätigungskraft eine Schnappwirkung erzielt, d. h. die Kraft-Weg-Kennlinie wird stark nichtlinear. Allerdings ist der Verlauf dieser Kennlinie sehr stark durch die Gleitreibung der Fussbogen auf der Gegenfläche bestimmt. Da es praktisch unmöglich ist, den Gleitreibungskoeffizienten über die geforderte hohe Anzahl von Tastenbetätigungen konstant zu halten, ist eine Feder dieser Art nicht sehr geeignet für diese Aufgabe. Dazu kommen noch mögliche Probleme mit dem bei Gleitreibung unvermeidbaren Abrieb.

Es ist nun Aufgabe der vorliegenden Erfindung, eine Feder für die Rückstellung des Stössels eines Tastenelementes vorzusehen, welche klein, einstückig und billig ist und eine einen Druckpunkt ergebende, bogenförmige Kraft/Weg-Kennlinie aufweist, die über die Lebensdauer des Tastenelementes praktisch konstant bleibt.

Gelöst wird diese Aufgabe durch die im Kennzeichen des ersten Anspruchs angeführten Merkmale. Vorteilhafte Weiterbildungen können den abhängigen Ansprüchen entnommen werden.

Ein Ausführungsbeispiel der Erfindung wird nun anhand der Zeichnung näher erläutert. In der Zeichnung zeigt :

Die Fig. 1 eine Stösselfeder in nicht vorgespanntem Zustand ;

Die Fig. 2 eine in eine Taste eingebaute Stösselfeder bei Ruhelage der Taste ;

Die Fig. 3 eine eingebaute Feder bei halb betätigter Taste ;

Die Fig. 4 eine eingebaute Feder bei voll betätigter Taste ;

Die Fig. 5 Einzelheiten der Ausbildung der Feder ; und

Die Fig. 6 die Kraft/Weg-Kennlinien von verschiedenen Stösselfedern.

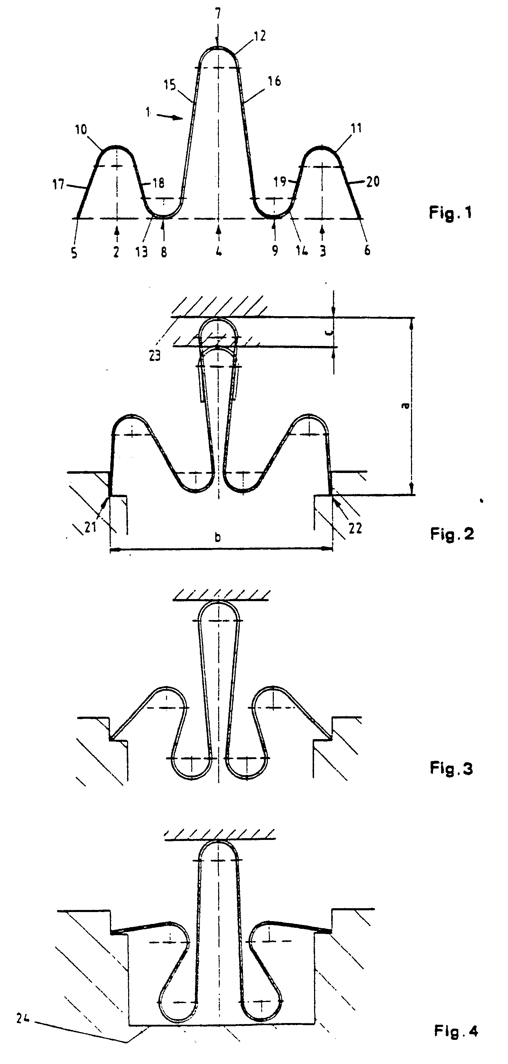

Die in Fig. 1 in nicht vorgespanntem Zustand und gegenüber der Wirklichkeit stark vergrössert gezeigte Feder 1 ist aus Flachmaterial mit den Abmessungen 2,45 × 0,065 mm gebogen. Als Material wird mit Vorteil naturharter, rostfreier Stahl verwendet. Es sind aber auch andere Materialien verwendbar, z. B. eine der üblichen, kupferhaltigen Federlegierungen oder auch Kunststoffe. Die Verwendung von korrosionsfestem Material ist von Vorteil, um keine nachteilige Beinflussung der Dauer-Biegewechselfestigkeit der Feder bei Einsatz der Taste in korrosiver Atmosphäre in Kauf nehmen zu müssen. Die Feder ist mäanderartig geformt und weist zwei Endschlaufen 2 und 3 und eine ungefähr doppelt so hohe Mittelschlaufe 4 auf, wobei alle Schlaufen in der gleichen Ebene liegen.

Im nicht vorgespannten Zustand, den Fig. 1 zeigt, besteht der Mäander aus geraden Abschnitten 15-20, die durch kreisbogenförmige Abschnitte 10-14 mit einheitlichem Biegeradius von 0.75 mm miteinander verbunden sind. Die Federenden 5 und 6 ergeben Auflagepunkte für die Feder 1, wobei sich diese Enden in den zugehörigen Widerlagern des Tastenkörpers um eine zur genannten Ebene senkrechte Achse frei drehen können. Die Betätigungskraft für die Taste greift im Punkt 7 an der Oberseite des Bogens 12 der Mittelschlaufe 4 an.

Die Schenkel 17 und 18 bezw. 19 und 20 der Endschlaufen 2 und 3 schliessen einen Winkel von 25-50° ein, der Winkel zwischen den Schenkeln 18 bezw. 19 der Endschlaufen 2 und 3 und den jeweils benachbarten Schenkeln 15 bezw. 16 der Mittelschlaufe 4 liegt zwischen 15-30° und die Schenkel 15 und 16 der Mittelschlaufe 4 schliessen einen zwischen 10-20° liegenden Winkel ein. Es ist ersichtlich, dass diese Winkel von den Federenden her zur Mitte hin kleiner werden.

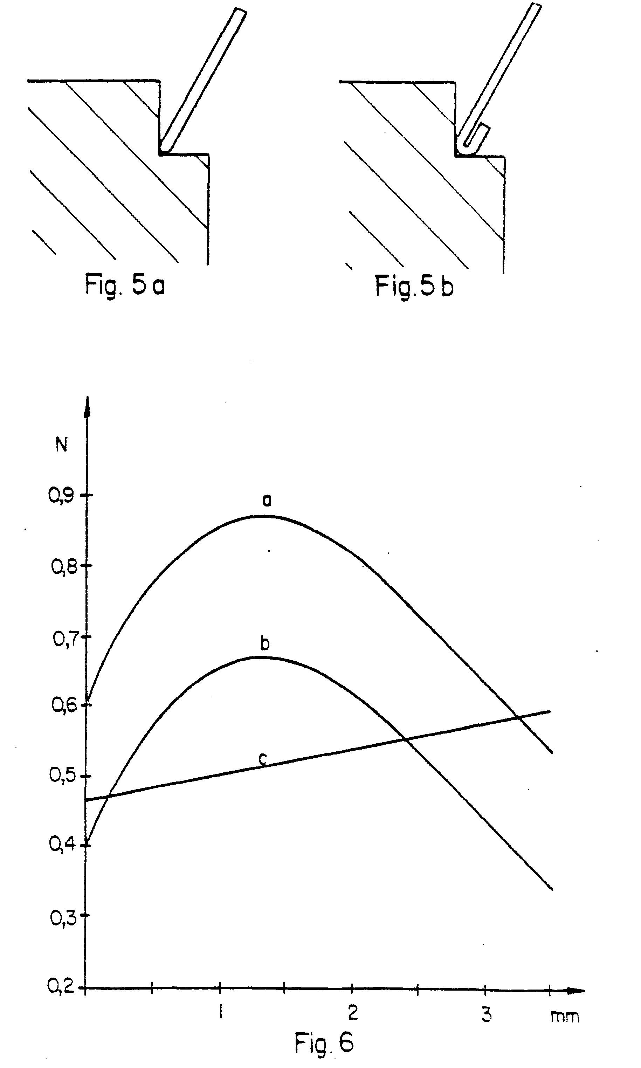

In den nachfolgenden Fig. 2-4, die die Feder wiederum stark vergrössert bei unterschiedlichen Betätigungswegen zeigen, sind die Ueberweisungszeichen der Feder 1 nicht wiederholt, da sie gleich wie in Fig. 1 sind. Bei der in Fig. 2 gezeigten, in eine Taste eingebauten Feder wird diese zwischen den Widerlagern 21, 22, die einen Abstand b von höchstens 8 mm aufweisen, in horizontaler Richtung um ca. 20 % vorgespannt. Dadurch hebt sich die Mittelschlaufe 4 etwas an, so dass deren höchster Punkt 7 den Tastenstössel mit der gewünschten, in der Kraft/Weg-Kennlinie von Fig. 6 bei Tastenhub 0 sichtbaren Anfangskraft gegen einen Hubbegrenzungsanschlag drückt, wobei die Feder eine Höhe a von höchstens 10 mm erreicht. Wenn der Hub linear zunimmt, nimmt die nötige Betätigungskraft unterproportional zu und die Federenden 5 und 6 drehen sich in ihren Widerlagern 21, 22, bis die Feder bei ungefähr halbem Hub die in Fig. 3 gezeigte Form annimmt und die nötige Betätigungskraft das in den Kurven a) und b) von Fig. 6 sichtbare Maximum durchläuft. Bei weiterer linearer Zunahme des Hubes drehen sich die Endschenkel 17 und 20 weiter gegen die Horizontale, um diese in der in Fig. 4 gezeigten Endstellung der Feder fast zu erreichen, dabei nimmt die nötige Betätigungskraft überproportional ab und erreicht in der Endstellung bei einem Hub c von 3,5 mm angenähert den gleichen Wert wie bei Hub 0.

Wie die Kurven a) und b) in Fig. 6 zeigen, kann durch entsprechende Wahl der Dicke des Flachmaterials, 0,070 mm bei Kurve a) bezw. 0.065 mm bei Kurve b), innnerhalb gewisser Grenzen eine Parallelverschiebung der Kraft/Weg-Kennlinie bei gleichem Hub erhalten werden. Zum Vergleich ist noch die lineare Kraft/Weg-Kennlinie c) einer Schraubenfeder angegeben. Es ist zu bemerken, dass sich bei Tastenbetätigung hauptsächlich die Verbindungsbogen, insbesondere die Bogen 13 und 14 verändern. Tatsächlich verbiegen sich auch die in Fig. 1 geraden Abschnitte 15-20 etwas, was jedoch in der Zeichnung nicht sichtbar ist.

Für den Fachmann ist es klar, dass die Längen der einzelnen Schenkel der Schlaufen derart zu wählen sind, dass bei dem für die Feder zur Verfügung stehenden Raum und beim geforderten Hub der Taste kein Reiben der Bogen 10 und 11 an den Schenkeln 15 und 16 auftritt, und dass in der tiefsten Stellung der Taste die Bogen 13 und 14 den Boden 24 des zur Verfügung stehenden Raumes noch nicht berühren, damit nicht Reibmomente die Federkennlinie verfälschen. Reibmomente könnten sich auch zwischen den Federenden 5, 6 und den Widerlagern 21, 22 des Tastenkörpers ergeben, was nicht nur zu einer Verfälschung der Federkennlinie, sondern auch zu schädlichem Abrieb führen würde. Um dies zu vermeiden, wird vorgeschlagen, die Federenden zu verrunden, entweder durch Entgraten der Schnittstellen an den Federenden auf mechanischem oder chemischem Weg, welche Lösung in Fig. 5a gezeigt ist, oder durch enges Umbiegen von Endlappen der Feder, wie dies Fig. 5b zeigt.

Mit der vorstehend beschriebenen Feder kann also auf eng begrenztem Raum mit einem einzigen Element ein Druckpunkt für die Betätigung einer Taste, eine definierte Anfangskraft und eine definierte Rückstellkraft für den Tastenstössel erreicht werden. Als Material für die Feder kann handelsübliches Bandmaterial verwendet werden.

**Patentansprüche**

1. Einstückige, mäanderartige Feder für die Rückstellung des Stössels einer Taste, welche Feder über einem gegebenen Betätigungsweg der Taste eine nichtlineare Kraft/Weg-Kennlinie aufweist, bei welcher Feder die einzelnen Schlaufen des Mäanders in einer Ebene liegen und die Federenden sich um eine zu dieser Ebene senkrechte Achse drehen können, wobei die Betätigungskraft auf die Spitze einer Schlaufe des Mäanders einwirkt, dadurch gekennzeichnet, dass die Feder (1) die Form eines Mäanders mit drei sich in der selben Richtung erstreckenden Schlaufen (2, 3, 4) aufweist, die in nicht vorgespanntem Zustand aus geraden (15-20) und kreisbögenförmigen (10-14) Abschnitten mit einheitlichem Biegeradius bestehen, wobei zwei Endschlaufen (2, 3) gleicher Höhe symmetrisch zu einer Mittelschlaufe (4) von ungefähr doppelter Höhe angeordnet sind, dass die Betätigungskraft auf die Spitze (7) der Mittelschlaufe (4) einwirkt, dass die Kraft-Weg-Kennlinie einen stetigen, bogenförmigen Verlauf aufweist, deren Kraftmaximum ungefähr in der Wegmitte auftritt, dass die Schlaufen der eingebauten Feder bei unbetätigter Taste bezüglich ihrer Weite (b) und ihrer Höhe (a) eine Vorspannung aufweisen, wobei die Vorspannung bezüglich der Weite die Form der bogenförmigen Kennlinie und die Vorspannung bezüglich der Höhe die Anfangsbetätigungskraft beeinflussen, welche Vorspannung durch den Einbau der Feder zwischen zwei bezüglich der Weite und der Höhe wirksamen Widerlagern (21, 22) und einem nur bezüglich der Höhe wirksamen Widerlager (23), an dem die Betätigungskraft angreift, erzeugt wird, das Ganze derart, dass bei der Tastenbetätigung ein Druckpunkt auftritt und am Anfang und am Ende des Betätigungsweges jeweils eine definierte Federkraft vorhanden ist.

2. Feder nach Anspruch 1, dadurch gekennzeichnet, dass bei nicht vorgespannter Feder die Schenkel (17, 18 ; 19, 20) der Endschlaufen (2, 3) einen Winkel von 25-50° einschliessen, dass die Schenkel (15, 16) der Mittelschlaufe (4) einen Winkel von 10-20° einschliessen, und dass die einander jeweils benachbarten Schenkel (15, 18 ; 16, 19) der Endschlaufen (2, 3) und der Mittelschlaufe (4) einen Winkel zwischen 15-30° einschliessen.

3. Feder nach Anspruch 2, dadurch gekennzeichnet, dass sie aus Flachmaterial mit einem Längen/Dicken-Verhältnis des unverformten Materials zwischen 400 und 600 besteht, und dass die Verbindungsbogen (10-14) zwischen den einzelnen Schlaufenschenkeln Biegeradien aufweisen, welche mindestens 5 mal grösser sind als die Dicke des Flachmaterials.

4. Feder nach Anspruch 2 oder 3, dadurch gekennzeichnet, dass das Federmaterial eine metallische Legierung oder Kunststoff ist.

5. Feder nach Anspruch 3, dadurch gekennzeichnet, dass die Federenden (5, 6) durch Entgraten der Schnittkanten oder Umbiegen eines Endlappens verrundet sind.

6. Feder nach Anspruch 5, dadurch gekennzeichnet, dass die eingebaute Feder bei unbetätigter Taste in einer zur Betätigungsrichtung der Taste senkrecht verlaufenden Richtung eine Länge (b) von höchstens 8 mm und in einer zur Betätigungsrichtung parallel verlaufenden Richtung eine Höhe (a) von höchstens 10 mm aufweist, und dass der genannte Betätigungsweg (c) 4 mm nicht übersteigt.

## Claims

1. A one-pice meander-like spring for resetting the stem of a push button which spring exhibits within a given displacement of the push button a nonlinear force vs. displacement characteristic, the individual loops of the meander of said spring lying within a plane and the ends of the spring being able to pivot about an axis being perpendicular to said plane, wherein the actuation force acts upon the tip of a loop of said meander, characterized in that the spring (1) has the shape of a meander with three loops (2, 3, 4) extending into the same direction and consisting in a nonpretensioned condition of straight sections (15-20) and segments (10-14) of uniform bending radii, two end loops (2, 3) of identical height being symmetrically arranged on both sides of a middle loop (4) of about twice said height, that the force vs. displacement characteristic has a steady, arc-like shape with a maximum of force substantially at half the displacement, that with non-actuated push button the loops of the mounted spring are pretensioned with respect to their width (b) and their height (a), the pretension with respect to the width influencing the shape of the arc-like characteristic and the pretension with respect to the height influencing the amount of the start actuation force, said pretension being produced by mounting the spring between two abutments (21, 23) effective with respect to said width and said height and one abutment (23) effective only with respect to said height upon which abutment the actuation force acts, the arrangement being such that when the push button is actuated a pull-off effect is achieved and a defined spring force is present at the start and at the end of said displacement.

2. The spring according to claim 2, characterized in that with not-pretensioned spring the legs (17 ; 18 ; 19, 20) of the end loops (2, 3) enclose angles of 25-50°, that the legs (15, 16) of the middle loop (4) enclose an angle of 10-20°, and that corresponding adjacent legs (15, 18 ; 16, 19) of the end loops (2, 3) and of the middle loop (4) enclose angles between 15-30°.

3. The spring according to claim 3, characterized in that it consists of flat material having in the unshaped condition a length-to-thickness ratio between 400-600, and that the connecting arcs (10-14) between the legs of the loops have bending radii being at least five times the thickness of the flat material.

4. The spring according to claim 2 or 3, characterized in that the spring material is a metallic alloy or a synthetic material.

5. The spring according to claim 4, characterized in that the spring ends (5, 6) are rounded by removing the burr of the cuts or by bending the ends.

6. The spring according to claim 6, characterized in that with non-actuated push button the mounted spring has a length (b) of at most 8mm along a direction extending perpendicularly to the direction of actuation of the push button and a height (a) of at most 10 mm along a direction extending in parallel to the direction of actuation of the push button, and that said displacement (c) does not exceed 4 mm.

**Revendications**

1. Ressort en une seule pièce conforme en méandres, pour le rappel du poussoir d'une touche, ce ressort ayant une caractéristique pression/distance non linéaire sur une course d'actionnement donnée, les boucles individuelles de ses méandres se situant dans un plan et ses extrémités pouvant pivoter sur des axes perpendiculaires à ce plan, tandis que la pression d'actionnement agit sur le sommet d'une boucle des méandres du ressort, caractérisé en ce que le ressort (1) a la forme de méandres comprenant trois boucles (2, 3, 4) s'étendant dans une même direction qui se composent, à l'état non précontraint, de parties droites (15-20) et en forme d'arcs de cercle (10-14) à rayon de courbure uniforme, les deux boucles extrêmes (2, 3) de même hauteur étant agencées symétriquement par rapport à la boucle centrale (4) de hauteur approximativement double, en ce que la pression d'actionnement agit sur le sommet (7) de la boucle centrale (4), en ce que la caractéristique pression/distance a une allure cintrée continue, dont le maximum de pression est environ à mi-distance, en ce que les boucles du ressort encastré d'une touche non actionnée présentent une précontrainte en ce qui concerne leur largeur (b) et leur hauteur (a), la précontrainte concernant la largeur influençant la caractéristique de courbure et la précontrainte concernant la hauteur influençant la pression initiale d'actionnement, cette précontrainte étant engendrée par le montage du ressort entre deux butées effectives (21, 22) concernant la largeur et la hauteur et une butée effective (23) concernant seulement la hauteur et sur laquelle s'applique la pression d'actionnement, l'ensemble étant tel que, lors d'un actionnement de la touche, un point dur apparaisse, tandis qu'une pression de rappel définie est obtenue au début et à la fin de la distance d'actionnement.

2. Ressort conforme à la revendication 1, caractérisé en ce que, dans un ressort non précontraint, les bras (17, 18 ; 19, 20) des boucles extrêmes (2, 3) embrassent un angle de 25-50°, les bras (15, 16) de la boucle centrale (4) embrassent un angle de 10-20° et les bras voisins l'un de l'autre (15, 18 ; 16, 19) des boucles extrêmes (2, 3) et de la boucle centrale (4) embrassent un angle de 15-30°.

3. Ressort conforme à la revendication 2, caractérisé en ce qu'il est constitué d'un matériau plat dont le rapport longueur/épaisseur, pour le matériau non déformé, est compris entre 400 et 600 et en ce que les arcs de liaison (10-14) entre les bras individuels des boucles ont des rayons de courbure qui sont au moins 5 fois plus grands que l'épaisseur du matériau plat.

4. Ressort conforme aux revendications 2 ou 3, caractérisé en ce que le matériau du ressort est un alliage de métaux ou une matière plastique.

5. Ressort conforme à la revendication 5, caractérisé en ce que les extrémités du ressort (5, 6) sont arrondies par ébarbage des arêtes ou pliage en agrafe terminale.

6. Ressort conforme à la revendication 5, caractérisé en ce que le ressort monté, la touche n'étant pas actionnée, présente une longueur (b) de 8 mm au plus, dans une direction s'étendant perpendiculairement à la direction d'actionnement de la touche, et une hauteur (a) de 10 mm au plus, dans une direction s'étendant parallèlement à la direction d'actionnement, et en ce que ladite distance d'actionnement (c) ne dépasse 4 mm.

EP 0 105 836 B1

Fig. 1

Fig. 2

Fig. 3

Fig. 4

EP 0 105 836 B1

Fig. 5 a

Fig. 5 b

Fig. 6